# EUROPEAN PATENT APPLICATION

(11) **EP 2 301 982 A1**
(43) Date of publication of application: **30.03.2011**
(21) Application number: 09797804.3
(22) Date of filing: 30.06.2009
(51) Int. Cl.: C08G 18/66, C08L 75/06

(54) **AQUEOUS POLYURETHANE RESIN DISPERSION AND METHOD FOR PRODUCING THE SAME**

(30) Priority: 16.07.2008 JP 2008184574; 16.07.2008 JP 2008184575
(71) Applicant: Ube Industries, Ltd., Ube-shi Yamaguchi 755-8633 (JP)
(72) Inventor: NAKAMURA, Taku, Ube-shi, Yamaguchi 755-8633 (JP); NAIKI, Masahiro, Ube-shi Yamaguchi 755-8633 (JP); TAKAHASHI, Manabu, Ube-shi Yamaguchi 755-8633 (JP)
(74) Representative: HOFFMANN EITLE
(86) International application number: PCT/JP2009/061892
(87) International publication number: WO 2010/007876

(57) **Abstract**

This is to provide an aqueous polyurethane resin dispersion which can form a tough coating film.

An aqueous polyurethane resin dispersion is obtained by dispersing an aqueous polyurethane resin, which is obtained by reacting (A) a polyurethane prepolymer obtained by reacting (a1) a polcarbonate polyol having no urethane bonding having an average molecular weight of 400 to 5000, and having 2.05 to 5 hydroxyl groups in average in one molecule, (b) a polyol compound having an acidic group and (c) a polyisocyanate, or obtained by reacting (a2) the polycarbonate polyol having no urethane bonding having an average molecular weight of 600 to 5000, and having 2.05 to 5 hydroxyl groups in average in one molecule, and having an acidic group, and (c) a polyisocyanate, and (B) a chain elongating agent having a reactivity with the isocyanate group of (A) the polyurethane prepolymer, being dispersed in an aqueous medium.

## Description

### TECHNICAL FIELD

The present invention relates to an aqueous polyurethane resin dispersion in which a polyurethane resin is dispersed in an aqueous medium, and process for preparing the same and a coating composition containing the same. The aqueous polyurethane resin dispersion of the present invention can be widely utilized as a starting material for a paint or a coating agent, etc.

### BACKGROUND ART

A polycarbonate polyol is a useful compound as a starting material for preparing a polyurethane resin which is used for preparing a hard foam, a soft foam, a paint, an adhesive, artificial leather, ink binder etc., by the reaction with an isocyanate compound.

Also, it has been known that a coating film obtained by coating an aqueous urethane resin dispersion which uses a polycarbonate polyol as a starting material is excellent in light resistance, heat resistance, hydrolysis resistance and oil resistance (see Patent Literature 1).

It has been proposed to obtain a urethane prepolymer having high water dispersibility by using, as polyol components of an aqueous urethane resin dispersion, a mixed polyol comprising a diol and a low molecular weight triol and reacting with an isocyanate (see Patent Literatures 2 and 3).

### PRIOR ART REFERENCES

### PATENT LITERATURE

[Patent Literature 1] JP H10-120757A
[Patent Literature 2] JP H3-174429A
[Patent Literature 3] JP H8-193181A

### SUMMARY OF THE INVENTION

### PROBLEMS TO BE SOLVED BY THE INVENTION

However, when a low molecular weight triol is present in much amount in the reaction to produce a urethane prepolymer, urethane bondings are accumulated at the branched portions by the triol according to the reaction of a low molecular weight triol and an isocyanate compound, whereby a portion having high density of urethane bondings occurs in the molecule.

When the polyurethane resin dispersion obtained by using a urethane prepolymer which has a portion having high density of urethane bondings is used as a starting material for a paint or coating agent, hydrogen bond is formed at the portion at which urethane bondings are accumulated, so that hardness can be revealed. However, packing of the whole molecule is disturbed so that there are problems that film-forming property is poor and uniform coating film can be difficultly obtained, and cracks likely occur at the resulting coating film.

### MEANS TO SOLVE THE PROBLEMS

The present inventors have carried out various investigations to solve the above-mentioned problems, and they have found that a polyurethane prepared by using a prepolymer obtained by reacting a specific polycarbonate polyol and an isocyanate gives good film-forming property and a tough coating film can be obtained because accumulation and localization of urethane bonding is inhibited, whereby the present invention has been accomplished.

The present invention is more specifically as mentioned below.
(1) an aqueous polyurethane resin dispersion which comprises an aqueous polyurethane resin obtained by reacting
   (A) a polyurethane prepolymer obtained by reacting (a1) a polcarbonate polyol having no urethane bonding, (b) a polyol compound having an acidic group, and (c) a polyisocyanate, and
   (B) a chain elongating agent having a reactivity with the isocyanate group of the above-mentioned (A) polyurethane prepolymer,
      being dispersed in an aqueous medium, and
      the above-mentioned (a1) polycarbonate polyol has a number average molecular weight of 400 to 5000, and has 2.05 to 5 hydroxyl groups in average in one molecule;
(2) the aqueous polyurethane resin dispersion described in (1), wherein (A) the polyurethane prepolymer is a material obtained by reacting (a1) a polcarbonate polyol having no urethane bonding, (a') a polycarbonate diol, (b) a polyol compound having an acidic group, and (c) a polyisocyanate, where the above-mentioned (a1) polycarbonate polyol has a number average molecular weight of 400 to 5000, and has 2.05 to 5 hydroxyl groups in average in one molecule;
(3) the aqueous polyurethane resin dispersion described in (1) or (2), wherein (a1) the polycarbonate polyol is a material obtained by reacting a diol compound, one or more polyol compounds selected from a triol compound, a tetraol compound and a pentaol compound, and a carbonate compound;
(4) the aqueous polyurethane resin dispersion described in (1) or (2), wherein (a1) the polycarbonate polyol is a material obtained by subjecting a polycarbonate diol, and one or more polyol compounds selected from a triol compound, a tetraol compound and a pentaol compound to transesterification reaction;
(5) an aqueous polyurethane resin dispersion which comprises an aqueous polyurethane resin obtained by reacting
   (A) a polyurethane prepolymer obtained by reacting (a2) a polycarbonate polyol having no urethane bonding and (c) a polyisocyanate, and
   (B) a chain elongating agent having a reactivity with the isocyanate group of the above-mentioned (A) polyurethane prepolymer,
   being dispersed in an aqueous medium, and
   the above-mentioned (a2) polycarbonate polyol has a number average molecular weight of 600 to 5000, has 2.05 to 5 hydroxyl groups in average in one molecule, and has an acidic group;
(6) the aqueous polyurethane resin dispersion described in the above-mentioned (5), wherein (A) the polyurethane prepolymer is obtained by reacting (a2) the polycarbonate polyol having no urethane bonding, (a') a polycarbonate diol and (c) a polyisocyanate, and the above-mentioned (a2) polycarbonate polyol has a number average molecular weight of 600 to 5000, has 2.05 to 5 hydroxyl groups in average in one molecule, and has an acidic group;
(7) the aqueous polyurethane resin dispersion described in the above-mentioned (5) or (6), wherein (a2) the polycarbonate polyol is a material obtained by subjecting a polycarbonate diol containing an acidic group obtained by reacting a polycarbonate diol and (b) a polyol compound having an acidic group, and one or more polyol compounds selected from a triol compound, a tetraol compound and a pentaol compound to transesterification reaction;
(8) a process for preparing an aqueous polyurethane resin dispersion which comprises the steps of:
   Step (α1) of reacting (a1) a polcarbonate polyol having no urethane bonding, (b) a polyol compound having an acidic group and (c) a polyisocyanate to obtain (A) a polyurethane prepolymer,
   Step (β) of neutralizing the acidic group of the above-mentioned (A) polyurethane prepolymer,
   Step (γ) of dispersing the above-mentioned (A) polyurethane prepolymer in an aqueous medium, and
   Step (δ) of reacting the above-mentioned (A) polyurethane prepolymer and (B) a chain elongating agent having a reactivity with the isocyanate group of the above-mentioned (A) polyurethane prepolymer to obtain an aqueous polyurethane resin,
   wherein the above-mentioned (a1) polycarbonate polyol has a number average molecular weight of 400 to 5000, and has 2.05 to 5 hydroxyl groups in average in one molecule;
(9) the process for preparing an aqueous polyurethane resin dispersion as described in the above-mentioned (8), wherein Step (α1) to obtain (A) the polyurethane prepolymer is a step of obtaining (A) a polyurethane prepolymer by reacting (a1) a polcarbonate polyol having no urethane bonding, (a') a polycarbonate diol, (b) a polyol compound having an acidic group, and (c) a polyisocyanate, where the above-mentioned (a1) polycarbonate polyol has a number average molecular weight of 400 to 5000, and has 2.05 to 5 hydroxyl groups in average in one molecule;
(10) a process for preparing an aqueous polyurethane resin dispersion which comprises the steps of:
   Step (α2) of reacting (a2) a polycarbonate polyol having no urethane bonding and (c) a polyisocyanate to obtain (A) a polyurethane prepolymer,
   Step (β) of neutralizing an acidic group of the above-mentioned (A) polyurethane prepolymer,
   Step (γ) of dispersing the above-mentioned (A) polyurethane prepolymer in an aqueous medium, and
   Step (δ) of reacting the above-mentioned (A) polyurethane prepolymer and (B) a chain elongating agent having a reactivity with the isocyanate group of the above-mentioned
      (A) polyurethane prepolymer to obtain an aqueous polyurethane resin,
         wherein the above-mentioned (a2) polycarbonate polyol has a number average molecular weight of 600 to 5000, has 2.05 to 5 hydroxyl groups in average in one molecule, and has an acidic group;
(12) the process for preparing an aqueous polyurethane resin dispersion as described in the above-mentioned (10), wherein Step (α2) to obtain (A) the polyurethane prepolymer is a step of reacting (a2) the polycarbonate polyol having no urethane bonding, (a') the polycarbonate diol, and (c) the polyisocyanate to obtain (A) a polyurethane prepolymer, where the above-mentioned (a2) polycarbonate polyol has a number average molecular weight of 600 to 5000, has 2.05 to 5 hydroxyl groups in average in one molecule, and has an acidic group;
(12) the process for preparing an aqueous polyurethane resin dispersion as described in any one of the above-mentioned (8) to (11), wherein Step (β) and Step (γ) are carried out simultaneously;
(13) the process for preparing an aqueous polyurethane resin dispersion as described in any one of the above-mentioned (8) to (11), wherein Step (γ) and Step (δ) are carried out simultaneously; and
(14) a coating composition containing the aqueous polyurethane resin dispersion as described in any one of the above-mentioned (1) to (7).

### EFFECTS OF THE INVENTION

The aqueous polyurethane resin dispersion of the present invention has good film-forming property and can form a coating film which is tough and has flexibility. Also, the process for preparing the aqueous polyurethane resin dispersion of the present invention gives an aqueous polyurethane resin dispersion which can form a coating film having strong toughness and flexibility, and also having solvent resistance and chemical resistance.

### BEST MODE TO CARRY OUT THE INVENTION

### ((a1) Polycarbonate polyol)

The (a1) polycarbonate polyol which can be used in the present invention has a number average molecular weight of 400 to 5000. If the above-mentioned molecular weight is less than 400, the resulting material is inferior in characteristics as a soft segment, and cracks will likely caused when a coating film is formed. If the above-mentioned molecular weight exceeds 5000, reactivity of (a1) the polycarbonate polyol and (c) the isocyanate compound is lowered, there are problems that preparation process of the urethane prepolymer takes much time and the reaction does not proceed sufficiently, or problems that a viscosity of the polycarbonate polyol becomes high whereby handling thereof becomes difficult. A preferred number average molecular weight of (a1) the polycarbonate polyol is 500 to 3500, particularly preferably 600 to 2500, most preferably 700 to 1900 (when no (a') polycarbonate diol is used) or 900 to 2000 (when (a') the polycarbonate diol is used). In the present invention, the number average molecular weight is a number average molecular weight calculated from quantitative values of the hydroxyl value and ¹H-NMR or by gas chromatography after alkali hydrolysis of the composition.

The above-mentioned (a1) polycarbonate polyol has 2.05 to 5 hydroxyl groups in average in one molecule. If a number of the above-mentioned hydroxyl groups is less than 2.05, modulus of elasticity of a coating film formed by using the obtained aqueous polyurethane resin dispersion becomes low, and effects in the point of solvent resistance or chemical resistance become low. If a number of the above-mentioned hydroxyl group exceeds 5, a density of cross-linking points in the urethane prepolymer is too high, and modulus of elasticity of a coating film formed by using the obtained aqueous polyurethane resin dispersion becomes high whereby the film likely causes cracks. The (a1) polycarbonate polyol preferably has 2.1 to 4.9 hydroxyl groups (when no (a') polycarbonate diol is used) in average or 2.05 to 4.0 hydroxyl groups (when (a') the polycarbonate diol is used) in average in one molecule.

The above-mentioned (a1) polycarbonate polyol has substantially no urethane bonding. Also, the above-mentioned (a1) polycarbonate polyol has substantially no acidic group.

A polyurethane resin dispersion in an aqueous medium obtained by using a polycarbonate diol and a polyol compound without using the above-mentioned (a1) polycarbonate polyol, reacting these with (b) a polyol compound having an acidic group and (c) a polyisocyanate to prepare a polyurethane prepolymer, and reacting the polyurethane prepolymer with (B) a chain elongating agent under the similar conditions, causes a portion in which a density of urethane bondings is high in the molecule since the urethane bondings obtained by the reaction of the polyol compound and the isocyanate compound are accumulated at the portion branched by the polyol as mentioned above. As compared with the above, the polyurethane resin dispersion obtained by using the above-mentioned (a1) polycarbonate polyol difficultely causes the above-mentioned accumulation of the urethane bondings, so that film formation is good and a coating film with tough and flexibility can be formed. Also, a coating film formed by using the polyurethane resin dispersion obtained byusing the above-mentioned (a1) polycarbonate polyol has strong toughness and flexibility, and has characteristics of solvent resistance and chemical resistance.

The above-mentioned (a1) polycarbonate polyol may be any material so long as it satisfies the above-regulated requirements. The (a1) polycarbonate polyol may be, for example, a material obtained by reacting a diol compound, one or more polyol compounds selected from a triol compound, a tetraol compound and a pentaol compound, and a carbonate compound, or else, a material obtained by subjecting a polycarbonate diol obtained by reacting a diol compound and a carbonate, and one or more polyol compounds selected from a triol compound, a tetraol compound and a pentaol compound to transesterification reaction, a material obtained by subjecting a polycarbonate polyol obtained by reacting one or more polyol compounds selected from a triol compound, a tetraol compound and a pentaol compound and a carbonate compound, and a polycarbonate diol to transesterification reaction, or a material obtained by subjecting a polycarbonate diol and one or more polyol compounds selected from a triol compound, a tetraol compound and a pentaol compound to transesterification reaction. It may be a material obtained by subjecting a polycarbonate polyol obtained by reacting one or more polyol compounds selected from a triol compound, a tetraol compound and a pentaol compound and a carbonate compound, and a diol compound to transesterification reaction, preferably a polycarbonate polyol obtained by reacting a diol compound, a polyol compound and a carbonate compound. As the polyol compound, a triol compound is particularly preferred.

The above-mentioned a diol compound is not particularly limited and there may be mentioned, for example, an aliphatic diol such as 1,6-hexanediol, 1,5-pentanediol, 2-ethyl-1,6-hexanediol, 1,4-butanediol, 1,9-nonanediol, 3-methyl-1,5-pentanediol, 2-methyl-1,8-octanediol, diethylene glycol, triethylene glycol, tetraethylene glycol, etc.; an alicyclic diol such as 1,4-cyclohexanedimethanol, 1,3-cyclohexanedimethanol, 1,4-cyclohexanediol, 1,3-cyclopentanediol, 1,4-cycloheptanediol, 2,5-bis(hydroxymethyl)-1,4-dioxane, 2,7-norbornanediol, tetrahydrofuran dimethanol, 1,4-bis(hydroxyethoxy)-cyclohexane, etc.; and an aromatic diol such as bisphenol A, etc., and of these, an aliphatic diol is preferred.

The above-mentioned triol compound is not particularly limited, and may be mentioned, for example, a trimethylol alkane such as trimethylolethane or trimethylolpropane, etc., or 3-methylpentane-1,3,5-triol or glycerine, etc. Of these, trimethylolpropane is preferred since it can be easily obtained.

The tetraol compound is not particularly limited, and, for example, there may be mentioned butanetetraol, pentanetetraol, hexanetetraol, etc.

The pentaol compound is not particularly limited, and, for example, there may be mentioned pentane pentaol, hexane pentaol, etc.

The polyol compound selected from a diol compound and a triol compound, a tetraol compound and a pentaol compound to be used for the preparation of (a1) the polycarbonate polyol each does not contain an acidic group.

When (a') the polycarbonate diol is not used, a ratio of a molar number of the polyol component (preferably triol component) to a molar number of the diol component in (a1) the polycarbonate polyol is preferably 0.01 to 1, more preferably 0.04 to 0.07, and when (a') the polycarbonate diol is used, a ratio of a molar number of the polyol component to a molar number of the diol component in (a1) the polycarbonate polyol is preferably 0.05 to 1, more preferably 0.1 to 0.5.

The above-mentioned carbonate is not particularly limited, and may be mentioned, for example, an aliphatic carbonate such as dimethylcarbonate, diethyl carbonate, etc., an aromatic carbonate such as diphenyl carbonate, etc., a cyclic carbonate compound such as ethylene carbonate, etc. Also, phosgene which can form the similar polycarbonate polyol can be used. Of these, an aliphatic carbonate is preferred since the above-mentioned polycarbonate polyol can be easily prepared, and dimethylcarbonate is particularly preferred.

The (a1) polycarbonate polyol can be obtained by reacting a diol compound, a polyol compound and a carbonate. In this case, a ratio of a molar number of the above-mentioned polyol compound to a molar number of the above-mentioned diol compound is preferably 0.03 to I when no (a') polycarbonate diol is used, and preferably 0.05 to 1 when (a') the polycarbonate diol is used. If a ratio of the above-mentioned polyol compound is too little, a number of the hydroxyl groups in average in (a1) the polycarbonate polyol molecule tends to be little, and modulus of elasticity of a coating film formed by using the obtained aqueous polyurethane resin dispersion tends to be low in some cases. If a ratio of the above-mentioned polyol compound is too much, a number of the hydroxyl groups in average in (a1) the polycarbonate polyol molecule tends to be much, and modulus of elasticity of a coating film formed by using the obtained aqueous polyurethane resin dispersion tends to be high so that the film easily causes cracks in some cases. A ratio of a molar number of the above-mentioned polyol compound based on a molar number of the above-mentioned a diol compound is, when no (a') polycarbonate diol is used, particularly preferably 0.04 to 0.07, and when (a') the polycarbonate diol is used, particularly preferably 0.1 to 0.5.

When (a1) the polycarbonate polyol is to be obtained by reacting the above-mentioned diol compound, the polyol compound and the carbonate, a ratio of a molar number of the above-mentioned a carbonate compound based on the total molar number of the above-mentioned diol compound and the above-mentioned triol compound is preferably 0.7 to 1.3, more preferably 0.9 to 1.1.

The (a1) polycarbonate polyol can be obtained by subjecting a polycarbonate diol and one or more polyol compounds selected from a triol compound, a tetraol compound and a pentaol compound to transesterification reaction, and in this case, a molar ratio of the polycarbonate diol and the polyol compound is preferably 0.01 to 1, particularly preferably 0.01 to 0.7. The polycarbonate diol can be obtained by reacting the above-mentioned diol compound and the above-mentioned carbonate compound.

The (a1) polycarbonate polyol can be obtained by subjecting the above-mentioned polycarbonate diol, and a polycarbonate polyol obtained by reacting one or more polyol compounds selected from a triol compound, a tetraol compound and a pentaol compound and a carbonate compound to transesterification reaction, and in this case, a ratio of a molar number of the polyol component based on a molar number of the diol component in (a1) the polycarbonate polyol is preferably 0.01 to 1, more preferably 0.01 to 0.7.

When the above-mentioned (a1) polycarbonate polyol prepolymer is to be prepared by transesterification reaction, a catalyst to be used may be mentioned a catalyst (transesterification catalyst) which is used in a usual transesterification reaction. The transesterification catalyst may be mentioned, as a catalyst, for example, an alkali metal compound such as a hydroxide of an alkali metal (lithium hydroxide, sodium hydroxide, potassium hydroxide, etc.), a carbonic acid salt of an alkali metal (lithium carbonate, sodium carbonate, potassium carbonate, etc.), a carboxylic acid salt of an alkali metal (lithium acetate, sodium acetate, potassium acetate, etc.), an alkali metal alkoxide (lithium methoxide, sodium methoxide, potassium t-butoxide, etc.), etc., an alkaline earth metal compound such as a hydroxide of an alkaline earth metal (magnesium hydroxide, etc.), an alkaline earth metal alkoxide (magnesium methoxide, etc.), etc., an aluminum compound such as aluminum alkoxide (aluminum ethoxide, aluminum isopropoxide, aluminum s-butoxide, etc.), aluminum acetylacetonate, etc., a zinc compound such as a carboxylic acid salt of zinc (zinc acetate, etc.), zinc acetylacetonate, etc., a manganese compound such as a carboxylic acid salt of manganese (manganese acetate, etc.), manganese acetylacetonate, etc., a nickel compound such as a carboxylic acid salt of nickel (nickel acetate, etc.), nickel acetylacetonate, etc., an antimony compound such as a carboxylic acid salt of antimony (antimony acetate, etc.), antimony alkoxide, etc., a zirconium compound such as zirconium alkoxide (zirconium propoxide, zirconium butoxide, etc.), zirconium acetylacetonate, etc., a titanium compound such as titanium alkoxide (tetraethoxytitanium, tetrapropoxytitanium, tetrabutoxytitanium, etc.), etc., and an organic tin compound (dibutyl tin oxide, dibutyl tin diacetate, dibutyl tin dilaurate), etc.

### ((a2) Polycarbonate polyol)

The (a2) polycarbonate polyol which can be used in the present invention has an average molecular weight of 600 to 5000. If the above-mentioned molecular weight is less than 600, it is inferior in characteristics as a soft segment, and cracks are easily occurred when a coating film is formed. If the above-mentioned molecular weight exceeds 5000, reactivity of (a2) the polycarbonate polyol and (c) the isocyanate compound is lowered, whereby there are problems that preparation process of the urethane prepolymer takes much time, or the reaction does not proceed sufficiently, or problems that a viscosity of the polycarbonate polyol becomes high whereby handing thereof becomes difficult, etc. A preferred number average molecular weight of (a2) the polycarbonate polyol is 700 to 3500 when no (a') polycarbonate diol is used, particularly preferably 900 to 2000, and when (a') the polycarbonate diol is used, it is preferably 700 to 3500, particularly preferably 900 to 3000, and most preferably 1000 to 2000.

The above-mentioned (a2) polycarbonate polyol has 2.05 to 5 hydroxyl groups in average in one molecule. If a number of the above-mentioned hydroxyl group is less than 2.05, modulus of elasticity of a coating film obtained by using the resulting aqueous polyurethane resin dispersion becomes low. Also, it a number of the above-mentioned hydroxyl group exceeds 5, a density of cross-linking points in the urethane prepolymer is too high, whereby modulus of elasticity of a coating film obtained by using the resulting aqueous polyurethane resin dispersion becomes high and the film likely causes cracks. The (a2) polycarbonate polyol preferably has 2.1 to 4.9 hydroxyl groups in average in one molecule when no (a') polycarbonate diol is used, and has 2.05 to 4.0 hydroxyl groups in average in the same when (a') the polycarbonate diol is used.

The above-mentioned (a2) polycarbonate polyol has an acidic group(s). The acidic group is not particularly limited, and there may be mentioned, for example, a carboxyl group, sulfonyl group, phospholic acid group and phenolic hydroxyl group. Of these, a carboxyl group is preferred in the points that it can be obtained easily and handling thereof is easy and simple.

The above-mentioned (a2) polycarbonate polyol does not substantially have urethane bonding.

The polyurethane resin dispersion in an aqueous medium obtained by using a polycarbonate diol and a polyol compound without using the above-mentioned (a2) polycarbonate polyol, reacting these with (b) a polyol compound having an acidic group and (c) a polyisocyanate to prepare a polyurethane prepolymer, and by reacting the polyurethane prepolymer with a chain elongating agent under the similar conditions, causes a portion in which a density of urethane bondings is high in the molecule since the urethane bondings obtained by the reaction of the polyol compound and the isocyanate compound are accumulated at the portion branched by the polyol as mentioned above. As compared with the above, the polyurethane resin dispersion obtained by using the above-mentioned (a2) polycarbonate polyol hardly causes accumulation of the urethane bonding as mentioned above. Thus, it has a good film-forming property, and can form a coating film which is tough and has flexibility. In addition, the coating film formed by using the polyurethane resin dispersion obtained by using the above-mentioned (a2) polycarbonate polyol has characteristics that it has strong toughness and flexibility, and also has solvent resistance and chemical resistance.

The above-mentioned (a2) polycarbonate polyol may be any material so long as it satisfies the requirements regulated as mentioned above. The (a2) polycarbonate polyol can be obtained by subjecting a polycarbonate diol containing an acidic group obtained by reacting a polycarbonate diol and (b) a polyol compound having an acidic group, and one or more polyol compounds selected from a triol compound, a tetraol compound and a pentaol compound to transesterification reaction, or, by reacting a polycarbonate polyol obtained by reacting a polycarbonate diol, one or more polyol compounds selected from a triol compound, a tetraol compound and a pentaol compound and a carbonate compound, with (b) a polyol compound having an acidic group, by reaccting a second polycarbonate polyol which is obtained by reacting a polycarbonate polyol obtained by reacting one or more polyol compounds selected from a triol compound, a tetraol compound and a pentaol compound and a carbonate compound, with a polycarbonate diol, and (b) a polyol compound having an acidic group, by reacting a polycarbonate polyol which is obtained by reacting a diol compound, one or more polyol compounds selected from a triol compound, a tetraol compound and a pentaol compound and a carbonate compound, with (b) a polyol compound having an acidic group, by reacting a second polycarbonate polyol obtained by reacting a polycarbonate polyol which is obtained by reacting one or more polyol compounds selected from a triol compound, a tetraol compound and a pentaol compound, and a carbonate compound with (b) a polyol compound having an acidic group, with a diol compound, by reacting a polycarbonate polyol obtained by reacting a polycarbonate diol and one or more polyol compounds selected from a triol compound, a tetraol compound and a pentaol compound, and (b) a polyol compound having an acidic group, by reacting a second polycarbonate polyol obtained by reacting a polycarbonate polyol which is obtained by reacting one or more polyol compounds selected from a triol compound, a tetraol compound and a pentaol compound, and a carbonate compound with a diol compound, with (b) a polyol compound having an acidic group, preferably a material obtained by reacting a second polycarbonate polyol obtained by reacting a polycarbonate polyol which is obtained by reacting one or more polyol compounds selected from a triol compound, a tetraol compound and a pentaol compound, and a carbonate compound with a polycarbonate diol, with (b) a polyol compound having an acidic group.

The polycarbonate diol which is a starting material of the above-mentioned (a2) polycarbonate polyol, one or more polyol selected from a triol compound, a tetraol compound and a pentaol compound, the carbonate compound, and the catalyst, etc., can be used as those mentioned in the above-mentioned (a1) polycarbonate polyol.

### ((a') Polycarbonate diol)

The above-mentioned (a') polycarbonate diol can be obtained by reacting a diol compound and a carbonate. The (a') polycarbonate diol does not substantially contain a urethane bonding and an acidic group. The diol compound and the carbonate compound can be used those described in (a1) the polycarbonate polyol. A number average molecular weight of (a') the polycarbonate diol is preferably 500 to 5000, particularly preferably 900 to 3000. If the number average molecular weight of (a') the polycarbonate diol is too small, a number of the urethane bondings becomes large as a result, so that dispersibility of the aqueous polyurethane resin dispersion tends to be worse, while a number average molecular weight of (a') the polycarbonate diol is too large, strength of the coating film tends to be lowered.

In the present invention, (a1) the polycarbonate polyol, (a2) the polycarbonate polyol and (a') the polycarbonate diol are polyols different from each other.

### ((b) Polyol compound having an acidic group)

The above-mentioned (b) polyol compound having an acidic group preferably has 2 hydroxyl groups in one molecule, and the acidic group is not particularly limited, and there may be mentioned a carboxyl group, sulfonyl group, phospholic acid group and phenolic hydroxyl group. Of these, a carboxyl group is preferred in the points that it can be obtained easily and handling thereof is easy and simple. The (b) polyol compound having an acidic group which can be used in the present invention may be more specificallymentioned a dimethylolalkanoic acid such as 2,2-dimethylol propionic acid, 2,2-dimethylolbutanoic acid, etc.; and N,N-bishydroxyethylglycine, N,N-bishydroxyethylalanine, 3,4-dihydroxybutanesulfonic acid, and 3,6-dihydroxy-2-toluenesulfonic acid, etc. Of these, a dimethylolalkanoic acid is preferred in the point that it can be obtained easily, and 2,2-dimethylol propionic acid is more preferred.

The (a2) polycarbonate polyol can be obtained by various reactions of the diol compound, one or more polyol compounds selected from a triol compound, a tetraol compound and a pentaol compound, (b) the polyol compound having an acidic group and the carbonate compound as mentioned above. In this case, a ratio of a molar number of the above-mentioned polyol compound to a molar number of the above-mentioned diol compound is preferably 0.01 to 1, particularly preferably 0.01 to 0.7 when no (a') polycarbonate diol is used, and when (a') the polycarbonate diol is used, it is preferably 0.05 to 1, particularly preferably 0.1 to 0.5.

The (a2) polycarbonate polyol can be also obtained by subjecting the acidic group-containing polycarbonate diol obtained by reacting the polycarbonate diol and (b) the polyol compound having an acidic group, and one or more polyol compounds selected from a triol compound, a tetraol compound and a pentaol compound to transesterification reaction.

### ((c) Polyisocyanate compound)

(c) The polyisocyanate compound which can be used in the present invention is not particularly limited, and, more specifically there may bementioned an aromatic polyisocyanate compound such as 1,3-phenylenediisocyanate, 1,4-phenylene diisocyanate, 2,4-tolylene diisocyanate (TDI), 2,6-tolylene diisocyanate, 4,4'-diphenylene-methane diisocyanate (MDI), 2,4-diphenylmethane diisocyanate, 4,4'-diisocyanat-biphenyl, 3,3'-dimethyl-4,4'-diisocyanat biphenyl, 3,3'-dimethyl-4,4'-diisocyanat diphenylmethane, 1,5-naphthylene diisocyanate, 4,4',4"-triphenylmethane triisocyanate, m-isocyanatphenylsulfonyl isocyanate, p-isocyanatphenylsulfonyl isocyanate, etc.; an aliphatic polyisocyanate compound such as ethylene diisocyanate, tetramethylene diisocyanate, hexamethylene diisocyanate (HDI), dodecamethylene diisocyanate, 1,6,11-undecane triisocyanate, 2,2,4-trimethylhexamethylene diisocyanate, lysine diisocyanate, 2,6-diisocyanatmethyl caproate, bis(2-isocyanatethyl)fumarate, bis(2-isocyanatethyl) carbonate, 2-isocyanatethyl-2,6-diisocyanathexanoate, etc.; an alicyclic polycyanate compound such as isophorone diisocyanate (IPDI), 4,4'-dicyclohexylmethanediisocyanate (hydrogen-added MDI), cyclohexylenediisocyanate, methylcyclohexylenediisocyanate (hydrogen added TDI), bis(2-isocyanateethyl)-4-cyclohexene-1,2-dicarboxylate, 2,5-norbornanediisocyanate, 2,6-norbornanediisocyanate, etc. These polyisocyanate compounds may be used a single kind alone or two or more kinds in combination.

A number of the isocyanate group in the above-mentioned polyisocyanate compound per one molecule is generally 2, and a polyisocyanate having 3 or more isocyanate groups such as triphenylmethanetriisocyanate, etc., may be used in the range in which the polyurethane resin of the present invention is not gellated.

Of the above-mentioned polyisocyanate compounds, 4,4'-diphenylenemethane-diisocyanate (MDI), isophorone diisocyanate (IPDI), and 4,4'-dicyclohexylmethane-diisocyanate (hydrogen-added MDI) are preferred in the points of controlling reactivity and providing high modulus of elasticity.

### ((A) Polyurethane prepolymer)

The (A) polyurethane prepolymer which can be used in the the present invention may be a material obtained by reacting the above-mentioned (a1) polycarbonate polyol, the above-mentioned (b) polyol compound having an acidic group and the above-mentioned (c) polyisocyanate compound, or a material obtained by reacting the above-mentioned (a2) polycarbonate polyol and the above-mentioned (c) polyisocyanate compound.

When (A) the urethane prepolymer is to be obtained by reacting the above-mentioned (a1) polycarbonate polyol, the above-mentioned (b) polyol compound having an acidic group and (c) the polyisocyanate compound, a molar ratio of the above-mentioned (b) polyol having an acidic group to the above-mentioned (a1) polycarbonate polyol is preferably 0.2 to 5.0. If an amount of the above-mentioned (b) polyol having an acidic group is too little, dispersibility of the resulting aqueous polyurethane resin dispersion in an aqueous medium tends to be poor. Also, if an amount of the above-mentioned (b) polyol having an acidic group is too much, hydrolysis resistance of the coating film tends to be lowered. A molar ratio of the above-mentioned (b) polyol having an acidic group to the above-mentioned (a1) polycarbonate polyol is particularly preferably 0.5 to 2.5.

A ratio of a molar number of the isocyanate group in the above-mentioned (c) polyisocyanate compound to a molar number of the hydroxyl groups in the polyol components comprising the above-mentioned (a1) polycarbonate polyol and the above-mentioned (b) polyol compound having an acidic group, or the above-mentioned (a2) polycarbonate polyol is preferably 0.8 to 3.0. If a molar number of the hydroxyl groups in the above-mentioned polyol components is too much, a number of molecules which have no isocyanate group at the end of the molecule becomes large so that a number of the molecules which do not react with the chain elongating agent becomes large, whereby there is a problem that film-forming property of a coating film obtained by coating the aqueous polyurethane resin dispersion of the present invention is poor. Also, if a molar number of the hydroxyl groups in the polyol components is too little, the above-mentioned unreacted (c) polyisocyanate compound remains in the reaction system with a larger amount, which sometimes reacts with the above-mentioned chain elongating agent, or reacts with water to cause molecular elongation, whereby there is a problem that seeding is generated in the coating film obtained by coating the aqueous polyurethane resin dispersion of the present invention. A ratio of a molar number of the isocyanate group in the above-mentioned (c) polyisocyanate compound to a molar number of the hydroxyl groups in the polyol components is particularly preferably 1.0 to 2.5.

The (A) polyurethane prepolymer which can be used in the present invention may be a material obtained by reacting the above-mentioned (a1) polycarbonate polyol, (a') the polycarbonate diol, the above-mentioned (b) polyol compound having an acidic group and the above-mentioned (c) polyisocyanate compound, or a material obtained by reacting the above-mentioned (a2) polycarbonate polyol, (a') the polycarbonate diol and the above-mentioned (c) polyisocyanate compound.

When (A) the urethane prepolymer is to be obtained by reacting the above-mentioned (a1) polycarbonate polyol, (a') the polycarbonate diol, the above-mentioned (b) polyol compound having an acidic group and (c) the polyisocyanate compound, a ratio of (a') the polycarbonate diol based on the above-mentioned (a1) polycarbonate polyol is preferably 0.5 to 0.8, more preferably 0.6 to 0.7. If an amount of the above-mentioned (a') polycarbonate diol is too little, flexibility of the coating film obtained by using the resulting aqueous polyurethane resin dispersion tends to be poor, while if it is too much, strength of the coating film obtained by using the resulting aqueous polyurethane resin dispersion tends to be low in some cases.

A molar ratio of the above-mentioned (b) polyol having an acidic group to a molar number of the sum of the above-mentioned (a1) polycarbonate polyol and (a') the polycarbonate diol is preferably 0.2 to 5.0. If an amount of the above-mentioned (b) polyol having an acidic group is too little, dispersibility of the resulting aqueous polyurethane resin dispersion in an aqueous medium tends to be poor. While if an amount of the above-mentioned (b) polyol having an acidic group is too much, hydrolysis resistance of the coating film tends to be lowered in some cases. A molar ratio of the above-mentioned (b) polyol having an acidic group to a molar number of the sum of the above-mentioned (a1) polycarbonate polyol and (a') the polycarbonate diol is particularly preferably 0.5 to 2.5.

A ratio of a molar number of the isocyanate group in the above-mentioned (c) polyisocyanate compound based on a molar number of the hydroxyl groups in the polyol components comprising the above-mentioned (a1) polycarbonate polyol, the above-mentioned (a') polycarbonate diol and the above-mentioned (b) polyol compound having an acidic group, or the above-mentioned (a2) polycarbonate polyol and (a') the polycarbonate diol is preferably 0.8 to 3.0. If the molar number of the hydroxyl groups in the above-mentioned polyol components is too much, an amount of the molecules having no isocyanate group at the molecular ends tends to be much, and an amount of the molecules which do not react with the chain elongating agent tends to be much, whereby there is a problem that a film-forming property of a coating film obtained by coating the aqueous polyurethane resin dispersion of the present invention is poor. Also, if the molar number of the hydroxyl groups in the polyol components is too little, a large amount of unreacted above-mentioned (c) polyisocyanate compound remains in the reaction system, which reacts with the above-mentioned chain elongating agent, or reacts with water to cause molecular elongation, whereby there is a problem that seeding occurs in a coating film obtained by coating the aqueous polyurethane resin dispersion of the present invention. A ratio of a molar number of the isocyanate group in the above-mentioned (c) polyisocyanate compound based on a molar number of the hydroxyl groups in the polyol components is particularly preferably 1.0 to 2.5.

When the above-mentioned (a1) polycarbonate polyol, the above-mentioned (b) polyol compound having an acidic group and the above-mentioned (c) polyisocyanate compound are to be reacted, or when the above-mentioned (a2) polycarbonate polyol and the above-mentioned (c) polyisocyanate compound are to be reacted, or, when the above-mentioned (a1) polycarbonate polyol, (a') the polycarbonate diol, the above-mentioned (b) polyol compound having an acidic group and the above-mentioned (c) polyisocyanate compound are to be reacted, or when the above-mentioned (a2) polycarbonate polyol, (a') the polycarbonate diol and the above-mentioned (c) polyisocyanate compound are to be reacted, a catalyst may be used.

The above-mentioned catalyst is not particularly limited, and there may be mentioned, for example, a salt of a metal and an organic and inorganic acid such as a tin series catalyst (trimethyl tin laurate, dibutyl tin dilaurate, etc.) or a lead series catalyst (lead octylate, etc.), etc., and an organometallic derivative, amine series catalyst (triethylamine, N-ethylmorpholine, triethylenediamine, etc.), diazabicycloundecene series catalyst, etc. Of these, dibutyl tin dilaurate is preferred in view of reactivity.

A reaction temperature at the time of reacting the above-mentioned polycarbonate polyol and the above-mentioned polyisocyanate is not particularly limited, and 40 to 150°C are preferred. If the reaction temperature is too low, there is a case where the starting material(s) is/are not dissolved, or the resulting (A) urethane prepolymer has high viscosity whereby stirring is not carried out sufficiently. If the reaction temperature is too high, there is a case of causing inconvenience that side reaction occurs, etc. The reaction temperature is more preferably 60 to 120°C.

### (Chain elongating agent)

The (B) chain elongating agent of the present invention has reactivity with the isocyanate group of (A) the polyurethane prepolymer. The chain elongating agent may be mentioned, for example, a diamine compound such as ethylene diamine, 1,4-tetramethylene diamine, 2-methyl-1,5-pentanediamine, 1,4-butanediamine, 1,6-hexamethylenediamine, 1,4-hexamethylenediamine, 3-amino methyl-3,5,5-trimethylcyclohexylamine, 1,3-bis(amino methyl)cyclohexane, xylylene diamine, etc.; an amine compound such as piperazine, 2,5-dimethylpiperazine, diethylenetriamine, triethylenetetramine, etc., a diol compound such as ethyleneglycol, propylene glycol, 1,4-butanediol, 1,6-hexanediol, etc., polyalkylene glycols represented by polyethyleneglycol, and water, etc., and of these, a primary diamine compound is preferably mentioned. These may be used alone, or two or more kinds in combination.

### (Aqueous polyurethane resin)

The aqueous polyurethane resin of the present invention can be obtained by reacting (A) a polyurethane prepolymer and the above-mentioned (B) chain elongating agent. A temperature of the reaction is 0 to 80°C, preferably 0 to 60°C.

An amount of (B) the chain elongating agent to be added is preferably an equivalent amount or less of the isocyanate group which becomes a start point of chain elongation in the resulting urethane polymer. If (B) the chain elongating agent is added in excess of the equivalent amount of the isocyanate group, a molecular weight of the chain-elongated urethane polymer is lowered and a cohesive force of the coating film at the time of film-formation is lowered. Addition of (B) the chain elongating agent may be carried out after dispersing the polyurethane prepolymer in water or may be during dispersing procedure. Chain elongation may be carried out with water. In this case, water added as a dispersing medium also acts as a chain elongating agent.

### (Aqueous medium)

In the present invention, the polyurethane resin is dispersed in water. The polyurethane resin is dispersed in an aqueous medium. The above-mentioned aqueous medium may be mentioned water, a mixed solvent of water and a hydrophilic organic solvent, etc.

The above-mentioned water may be mentioned, for example, tap water, deionized water, distilled water, ultra pure water, etc. Of these, deionized water is preferably mentioned in consideration with easiness in obtaining the material and particles being unstable due the effect of a salt, etc.

The above-mentioned hydrophilic organic solvent may be mentioned a lower monovalent alcohol such as methanol, ethanol, propanol, etc.; a polyvalent alcohol such as ethyleneglycol, glycerine, etc.; an aprotic hydrophilic organic solvent such as N-methylmorpholine, dimethylsulfoxide, dimethylformamide, N-methylpyrrolidone, etc.
An amount of the above-mentioned hydrophilic organic solvent in the above-mentioned aqueous medium is preferably 0 to 20% by weight.

### (Aqueous polyurethane resin dispersion)

The aqueous polyurethane resin dispersion of the present invention can be prepared by Step (α) of obtaining (A) a polyurethane prepolymer, Step (β) of neutralizing the acidic group of (A) the polyurethane prepolymer, Step (γ) of dispersing the polyurethane prepolymer in an aqueous medium, and Step (δ) of reacting the isocyanate group of (A) the polyurethane prepolymer and (B) a chain elongating agent to obtain an aqueous polyurethane resin.

Step (α) to obtain (A) the polyurethane prepolymer may be carried out under inert gas atmosphere or under ambient air atmosphere.

In Step (β) of neutralizing the acidic group of the above-mentioned (A) polyurethane prepolymer, the neutralizing agent which can be used may be mentioned organic amines such as trimethylamine, triethylamine, triisopropylamine, tributylamine, triethanolamine, N-methyldiethanolamine, N-phenyldiethanolamine, dimethylethanolamine, diethylethanolamine, N-methylmorpholine, pyridine, etc.; inorganic alkalis such as sodium hydroxide, potassium hydroxide, etc., and ammonia, etc. Of the above-mentioned materials, preferred are organic amines, more preferably tertiary amine, and most preferably triethylamine.

In Step (γ) of dispersing the above-mentioned polyurethane prepolymer in an aqueous medium, a method for dispersing the polyurethane prepolymer in an aqueous medium is not particularly limited, and may be mentioned, for example, a method in which a urethane prepolymer or a urethane prepolymer solution is added to an aqueous medium which is stirred by a homomixer or a homogenizer, etc., or a method in which an aqueous medium is added to a urethane prepolymer stirred by a homomixer or a homogenizer, etc.

In Step (δ) in which the above-mentioned (A) polyurethane prepolymer and (B) a chain elongating agent having a reactivity with the isocyanate group of the above-mentioned (A) polyurethane prepolymer are reacted to obtain an aqueous polyurethane resin, the reaction may be carried out slowly under cooling, or in some cases, the reaction may be promoted under heating consitions at 60°C or lower.

Step (β) of neutralizing an acidic group of the above-mentioned (A) polyurethane prepolymer, and Step (γ) of dispersing the above-mentioned (A) polyurethane prepolymer in an aqueous medium may be carried out simultaneously, and Step (γ) of dispersing the above-mentioned (A) polyurethane prepolymer in an aqueous medium, and Step (δ) of reacting with (B) a chain elongating agent to obtain an aqueous polyurethane resin may be carried out simultaneously.

A ratio of the polyurethane resin in the aqueous polyurethane resin dispersion is 5 to 60% by weight, preferably 20 to 50% by weight.

### (Coating composition)

The present invention relates to a coating composition containing the above-mentioned aqueous polyurethane resin dispersion. In a paint of the present invention, it contains the above-mentioned aqueous polyurethane resin dispersion preferably in an amount of 5 to 60% by weight, more preferably 10 to 40% by weight.

The coating composition of the present invention may contain other resin(s) than the above-mentioned aqueous polyurethane resin dispersion. The above-mentioned other resin(s) may be mentioned a polyester resin, acrylic resin, polyether resin, poly carbonate resin, polyurethane resin, epoxy resin, alkyd resin, etc. These may be used alone, or two or more kinds in combination. The above-mentioned other resin(s) is/are preferably at least one kind selected from the group consisting of a polyester resin and an acrylic resin.

Also, the above-mentioned other resin(s) preferably has one or more hydrophilic group(s). The above-mentioned hydrophilic group(s) may be mentioned a hydroxyl group, carboxyl group, sulfonic acid group, etc.

When the above-mentioned polyester resin or the above-mentioned acrylic resin has a hydroxyl group, it may be the so-called resin urethane-modified polyester resin or urethane-modified acrylic resin in which these resins are elongated to be a high molecular weighted by subjecting a part or whole of the hydroxyl groups and a polyisocyanate compound to urethanization reaction.

The above-mentioned polyester resin can be generally prepared by an esterification reaction or transesterification reaction of an acid component and an alcohol component.

The above-mentioned acid component may be used a compound generally used as an acid component at the time of preparation of the polyester resin. The acid component may be used, for example, an aliphatic polybasic acid, alicyclic polybasic acid, aromatic polybasic acid, etc.

A hydroxyl value of the above-mentioned polyester resin is preferably 10 to 300 mg KOH/g or so, more preferably 50 to 250 mg KOH/g or so, and further preferably 80 to 180 mg KOH/g or so. An acid value of the above-mentioned polyester resin is preferably 1 to 200 mg KOH/g or so, more preferably 15 to 100 mg KOH/g or so, and further preferably 25 to 60 mg KOH/g or so. A weight average molecular weight of the above-mentioned polyester resin is preferably 500 to 50,000, more preferably 1,000 to 30,000, and further preferably 1,500 to 20,000.

The above-mentioned acrylic resin is preferably a hydroxyl group-containing acrylic resin. The above-mentioned hydroxyl group-containing acrylic resin can be prepared by copolymerizing a hydroxyl group-containing polymerizable unsaturated monomer, and, if necessary, other polymerizable unsaturated monomer(s) which is copolymerizable with said hydroxyl group-containing polymerizable unsaturated monomer, for example, by a known method such as a solution polymerization method in an organic solvent, an emulsion polymerization method in water, etc.

The above-mentioned hydroxyl group-containing polymerizable unsaturated monomer is a compound having a hydroxyl group and a polymerizable unsaturated bond each one or more in one molecule. There may be mentioned, for example, a monoesterified product of a (meth)acrylic acid such as 2-hydroxyethyl(meth)acrylate, 2-hydroxypropyl(meth)acrylate, 3-hydroxypropyl(meth)acrylate, 4-hydroxybutyl(meth)-acrylate, etc., and a divalent alcohol having 2 to 8 carbon atoms; an ε-caprolactone-modified product of these monoesterified products; N-hydroxymethyl(meta)acrylamide; allyl alcohol; a (meth)acrylate having a polyoxyethylene chain a molecular end(s) of which is/are a hydroxyl group(s), etc.

The above-mentioned hydroxyl group-containing acrylic resin preferably has a cationic functional group. The hydroxyl group-containing acrylic resin having a cationic functional group can be prepared by, for example, using a polymerizable unsaturated monomer having a cationic functional group such as a tertiary amino group, quaternary ammonium salt group, etc., as a kind of the above-mentioned polymerizable unsaturated monomer.

A hydroxyl value of the above-mentioned hydroxyl group-containing acrylic resin is preferably 1 to 200 mg KOH/g or so in view of storage stability or water resistance of the resulting coating film, etc., more preferably 2 to 100 mg KOH/g or so, and further preferably 3 to 60 mg KOH/g or so. Also, when the hydroxyl group-containing acrylic resin has an acidic group such as a carboxyl group, etc., an acid value of said hydroxyl group-containing acrylic resin is preferably 1 to 200 mg KOH/g or so in view of water resistance, etc., of the resulting coating film, more preferably 2 to 150 mg KOH/g or so, and further preferably 5 to 100 mg KOH/g or so. A weight average molecular weight of the above-mentioned hydroxyl group-containing acrylic resin is preferably 1,000 to 200,000, more preferably 2,000 to 100,000, and further preferably it is suitable in the range of 3,000 to 50,000.

The above-mentioned polyether resin may be mentioned a polymer or copolymer having an ether bond, and there may be mentioned, for example, a polyoxyethylene series polyether, a polyoxypropylene series polyether, a polyoxybutylene series polyether, a polyether derived from an aromatic polyhydroxy compound such as bisphenol A, bisphenol F, etc.

As the above-mentioned polycarbonate resin, there may be mentioned a polymer prepared by a bisphenol compound, and, for example, bisphenol A·polycarbonate, etc., may be mentioned.
The above-mentioned poly carbonateresin may be mentioned a polymer prepared from a bisphenol compound, and for example, bisphenol A·polycarbonate, etc., may be mentioned.

The above-mentioned polyurethane resin may be mentioned a resin having an urethane bond which is obtained by the reaction of various kinds of polyol components such as acrylic, polyester, polyether, polycarbonate, etc., and a polyisocyanate compound.

The above-mentioned epoxy resin may be mentioned a resin obtained by the reaction of a bisphenol compound and epichlorohydrin, etc. The bisphenol may be mentioned, for example, bisphenol A, bisphenol F.

The above-mentioned alkyd resin may be mentioned an alkyd resin obtained by reacting a polybasic acid such as phthalic acid, terephthalic acid, succinic acid, etc., and a polyvalent alcohol, and further with a modifying agent such as oil and fats, oil and fats aliphatic acid (soybean oil, linseed oil, palm oil, stearic acid, etc.), a natural resin (rosin, amber, etc.), etc.

A curing agent may be added to the coating composition of the present invention, whereby water resistance, etc., of the coating film or plural-layered coating film prepared by using the above-mentioned coating composition can be improved. The above-mentioned curing agent may be used, for example, an amino resin, polyisocyanate compound, blocked polyisocyanate compound, melamine resin, carbodiimide, etc. The above-mentioned curing agent may be used one kind alone, or may be used a plural number thereof in combination.

The above-mentioned amino resin may be mentioned, for example, a partially or completely methylolated amino resin obtained by the reaction of an amino component and an aldehyde component. The above-mentioned amino component may be mentioned, for example, melamine, urea, benzoguanamine, acetoguanamine, stero-guanamine, spiroguanamine, dicyane diamide, etc. The aldehyde component may be mentioned, for example, formaldehyde, paraformaldehyde, acetaldehyde, benzaldehyde, etc.

The above-mentioned polyisocyanate compound may be mentioned, for example, a compound having 2 or more isocyanate groups in one molecule, and there may be exemplified by, for example, hexamethylene diisocyanate, trimethyl hexamethylene diisocyanate, etc.

The above-mentioned blocked polyisocyanate compound may be mentioned those obtained by adding a blocking agent to the polyisocyanate group of the above-mentioned polyisocyanate compound, and the blocking agent may be mentioned a blocking agent including a phenol series material such as phenol, cresol, etc., and an aliphatic alcohol series material such as methanol, ethanol, etc.

The above-mentioned melamine resin may be mentioned, for example, methylolmelamine such as dimethylolmelamine, trimethylolmelamine etc.; an alkyl etherified product or condensate of these methylolmelamines; a condensate of the alkyl etherified product of the methylolmelamine, etc.

To the coating composition of the present invention, a colored pigment, an extender pigment, or a photoluminescent pigment may be added.
The above-mentioned colored pigment may be mentioned, for example, titanium oxide, zinc white, carbon black, molybdenum red, Prussian blue, cobalt blue, azo pigment, phthalocyanine pigment, quinacridone pigment, isoindoline pigment, styrene series pigment, perylene pigment, etc. They may be used singly or two more kinds in combination. In particular, it is preferred to use titanium oxide and/or carbon black as a colored pigment.

The above-mentioned extender pigment may be mentioned, for example, clay, kaolin, barium sulfate, barium carbonate, calcium carbonate, talc, silica, alumina white, etc. They may be used singly or two more kinds in combination. In particular, it is preferred to use barium sulfate and/or talc as an extender pigment, and it is more preferred to use barium sulfate.

The above-mentioned photoluminescent pigment may be used, for example, aluminum, copper, zinc, brass, nickel, aluminum oxide, mica, aluminum oxide coated by titanium oxide or iron oxide, mica coated by titanium oxide or iron oxide, etc.

In the coating composition of the present invention, a usual additive for paint such as a thickening agent, curing catalyst, UV absorber, photostabilizer, defoaming agent, plasticizer, surface adjuster, anti-sediment agent, etc., may be contained singly or in combination of two or more kinds, if necessary.

A preparation method of the coating composition of the present invention is not particularly limited, and a conventionally known preparation method may be employed. In general, the coating composition can be prepared by mixing the above-mentioned aqueous polyurethane resin dispersion with the above-mentioned various kinds of additives, adding an aqueous medium, and regulating a viscosity suitable for the coating method.

As a material to be coated by the coating composition, a metal, plastic, inorganic material, etc., may be mentioned.

A coating method of the coating composition may be mentioned a bell coating, spray coating, roll coating, shower coating, dip coating, etc.

### EXAMPLES

All parts in Examples mean part by weight.

### [Example 1]

### (Preparation of Polycarbonate polyol (a1-1))

In 500 ml of a round-bottom flask made of a glass and equipped with a fractionating column, a stirrer, a thermometer and a nitrogen-introducing tube were charged 91.2 parts of dimethylcarbonate (available from UBE INDUSTRIES, LTD.), 134.2 parts of trimethylolpropane (available from MITSUBISHI GAS CHEMICAL COMPANY INC.), and 0.1 part of potassium carbonate, and transesterification reaction was carried out for 3 hours under normal pressure and under stirring while removing a mixture of methanol and dimethylcarbonate by distillation. During the procedure, the reaction temperature was gradually raised from 85°C to 110°C, and a composition of the distillate was controlled so that it became an azeotropic composition of methanol and dimethylcarbonate or a neighbor thereof Thereafter, the pressure was gradually reduced to 30 mmHg, and transesterification reaction was further carried out at 120°C for 2 hours under stirring while removing a mixture of methanol and dimethylcarbonate. After completion of the reaction (after completion of distillation of methanol and dimethylcarbonate), the reaction mixture was cooled to room temperature to obtain a polycarbonate polyol prepolymer. Incidentally, the transesterification reaction was carried out in a nitrogen stream. The resulting polycarbonate polyol prepolymer had a number average molecular weight of 500. Next, in 1000 ml of a round-bottom flask made of a glass and equipped with a stirrer, a thermometer, a nitrogen-introducing tube and a condenser were charged 15.0 parts of the obtained polycarbonate polyol prepolymer and 200 parts of polycarbonate diol (available from UBE INDUSTRIES, LTD., Trade name: ETERNACOLL UH-200, which uses 1,6-hexanediol and a carbonate as starting materials, a number average molecular weight: 2000, hydroxyl value: 56.1 mg KOH/g), and the mixture was stirred under reduced pressure of 50 mmHg and after reaching to the reaction temperature to 125°C, the reaction was carried out at 125°C for 4 hours. Sampling was carried out in the course of the reaction, and it was confirmed that the transesterification reaction reached to equilibrium by GPC measurement. After completion of the reaction, the reaction mixture was cooled to room temperature, and dissolved in 540 parts of ethyl acetate. 100 parts of water was added to the mixture and after stirring the mixture for 30 minutes, the aqueous layer was removed by separating the liquids. This operation was carried out once more to obtain an ethyl acetate solution. To the ethyl acetate solution was added 50 g of magnesium sulfate and the mixture was stirred for 30 minutes. Then, the mixture was filtered to remove magnesium sulfate, and ethyl acetate was then removed by distillation to obtain a trimethylolpropane-containing Polycarbonate polyol (a1-1). The obtained Polycarbonate polyol (a1-1) had a number average molecular weight of 1650, and an average hydroxyl group number of 2.8.

### (Preparation of aqueous polyurethane resin dispersion)

In a reaction device equipped with a stirrer and a heater were charged 48.0 parts of the above-mentioned trimethylolpropane-containing polycarbonate polyol (average molecular weight 1650, an average hydroxyl group number: 2.8), 3.9 parts of dimethylol propionic acid (available from NIPPON KASEI CHEMICAL CO., LTD.) and 26.1 parts ofmethylethyl ketone (hereinafter sometimes referred to as "MEK ".) while introducing a nitrogen gas. Thereafter, the mixture was heated to 60°C, and dissolution of dimethylol propionic acid was confirmed. To the mixture were added 28.6 parts of 4,4-dicyclohexylmethane diisocyanate (available from SUMITOMO BAYER URETHANE CO., LTD., hereinafter sometimes referred to as "hydrogen-added MDI".), and 0.02 part of dibutyl tin dilaurate as a catalyst, and the mixture was heated to 80°C to carry out urethanization reaction over 4 hours. To the mixture was further added 117.0 parts of MEK, and the resulting mixture was heated to 90°C for 3 hours to prepare a prepolymer (Step α). An NCO group content at the time of completion of the urethanization reaction was 2.3wt%. After cooling the reaction mixture to 30°C, 2.9 parts of triethylamine was added and mixed to carry out neutralization (Step β). Further, 187.8 parts of water was added to disperse the mixture (Step γ). Then, 14.0 parts of a 40wt% aqueous hexamethylenediamine solution was added to the mixture, and chain-elongation reaction was carried out at room temperature for 24 hours (Step δ). The formed product was heated under reduced pressure from the room temperature to 50°C for 3 hours to remove MEK to obtain Polyurethane resin dispersion 1.

### [Example 2]

### (Preparation of Polycarbonate polyol (a1-2))

In a round-bottom flask made of a glass and equipped with a fractionating column, a stirrer, a thermometer and a nitrogen-introducing tube were charged 486.4 parts of dimethylcarbonate, 5.4 parts of trimethylolpropane, 468.0 parts of 1,6-hexanediol and 0.6 part of potassium carbonate, under normal pressure and under stirring, while removing a mixture of methanol and dimethylcarbonate by distillation, transesterification reaction was carried out for 3 hours. During the procedure, the reaction temperature was gradually raised from 85°C to 110°C, and a composition of the distillate was controlled so that it became an azeotropic composition of methanol and dimethylcarbonate or a neighbor thereof. Thereafter, the pressure was gradually reduced to 30 mmHg, and transesterification reaction was further carried out at 120°C for 2 hours under stirring while removing a mixture of methanol and dimethylcarbonate by distillation. Sampling was carried out in the course of the reaction, and it was confirmed that the transesterification reaction reached to equilibrium by GPC measurement. After completion of the reaction, the reaction mixture was cooled to room temperature and dissolved in ethyl acetate. Water was added to the mixture, the mixture was stirred and the aqueous layer was removed by separating the liquids. This operation was carried out once more to obtain an ethyl acetate solution. To the ethyl acetate solutions was added magnesium sulfate, and the mixture was stirred and then filtered to remove magnesium sulfate. Thereafter, ethyl acetate was removed by distillation to obtain Polycarbonate polyol (a1-2). The resulting Polycarbonate polyol (a1-2) had a number average molecular weight of 700, and an average hydroxyl group number in one molecule of 2.1.

### (Preparation of aqueous polyurethane resin dispersion)

In a reaction device equipped with a stirrer and a heater were charged 20.3 parts of the above-mentioned Polycarbonate polyol (a1-2), 3.9 parts of dimethylol propionic acid and 17.6 parts of MEK while introducing nitrogen. Thereafter, the mixture was heated to 60°C, and dissolution of dimethylol propionic acid was confirmed. To the mixture were added hydrogen added 28.6 parts of MDI and 0.02 part of dibutyl tin dilaurate as a catalyst, and the mixture was heated to 80°C to carry out urethanization reaction over 4 hours. To the mixture was further added 76.3 parts of MEK, and the resulting mixture was heated to 90°C for 3 hours to prepare a prepolymer (Step α). An NCO group content at the time of completion of the urethanization reaction was 2.9wt%. After cooling the reaction mixture to 30°C, 2.9 parts of triethylamine was added and mixed to carry out neutralization (Step β). Further, 123.2 parts of water was added to disperse the mixture (Step γ). Then, 14.8 parts of a 40wt% aqueous hexamethylenediamine solution was added to the mixture, and chain-elongation reaction was carried out at room temperature for 24 hours (Step δ). The formed product was heated under reduced pressure from the room temperature to 50°C for 3 hours to remove MEK to obtain Aqueous polyurethane resin dispersion 2.

### [Example 3]

### (Preparation of Polycarbonate polyol (a1-3))

In a round-bottom flask made of a glass and equipped with a fractionating column, a stirrer, a thermometer and a nitrogen-introducing tube were charged 91.2 parts of dimethylcarbonate, 134.2 parts of trimethylolpropane and 0.1 part of potassium carbonate, and transesterification reaction was carried out for 3 hours under normal pressure and under stirring while removing a mixture of methanol and dimethylcarbonate by distillation. During the procedure, the reaction temperature was gradually raised from 85°C to 110°C, and a composition of the distillate was controlled so that it became an azeotropic composition of methanol and dimethylcarbonate or a neighbor thereof. Thereafter, the pressure was gradually reduced to 30 mmHg, and transesterification reaction was further carried out at 120°C for 2 hours under stirring while removing a mixture of methanol and dimethylcarbonate by distillation. After completion of the reaction (after completion of distillation of methanol and dimethylcarbonate), the reaction mixture was cooled to room temperature to obtain a polycarbonate polyol prepolymer. The resulting polycarbonate polyol prepolymer had a number average molecular weight of 500. Next, in 1000 ml of a round-bottom flask made of a glass and equipped with a stirrer, a thermometer, a nitrogen-introducing tube and a condenser were charged 25.0 parts of the resulting polycarbonate polyol prepolymer and 100 parts of a polycarbonate diol (available from UBE INDUSTRIES, LTD., Trade name: "ETERNACOLL UH-100", which uses 1,6-hexanediol and a carbonate as starting materials, a number average molecular weight: 1000, hydroxyl value: 112.2 mg KOH/g), and the mixture was stirred under reduced pressure of 50 mmHg and after reaching to the reaction temperature to 125°C, the reaction was carried out at 125°C for 4 hours. Sampling was carried out in the course of the reaction, and it was confirmed that the transesterification reaction reached to equilibrium by GPC measurement. After completion of the reaction, the reaction mixture was cooled to room temperature and dissolved in ethyl acetate. Water was added to the mixture, the mixture was stirred and the aqueous layer was removed by separating the liquids. This operation was carried out once more to obtain an ethyl acetate solution. To the ethyl acetate solutions was added magnesium sulfate, and the mixture was stirred and then filtered to remove magnesium sulfate. Thereafter, ethyl acetate was removed by distillation to obtain Polycarbonate polyol (a1-3). The resulting Polycarbonate polyol (a1-3) had a number average molecular weight of 830, and an average hydroxyl group number in one molecule of 2.1.

### (Preparation of aqueous polyurethane resin dispersion)

In a reaction device equipped with a stirrer and a heater were charged 24.1 parts of the above-mentioned polycarbonate polyol (a1-3), 3.9 parts of dimethylol propionic acid and 18.9 parts of MEK while introducing nitrogen. Thereafter, the mixture was heated to 60°C, and dissolution of dimethylol propionic acid was confirmed. To the mixture were added 28.6 parts of hydrogen-added MDI and 0.02 part of dibutyl tin dilaurate as a catalyst, and the mixture was heated to 80°C to carry out urethanization reaction over 4 hours. To the mixture was further added 86.2 parts of MEK, and the resulting mixture was heated to 90°C for 3 hours to prepare a prepolymer (Step α). An NCO group content at the time of completion of the urethanization reaction was 2.7wt%. After cooling the reaction mixture to 30°C, 2.9 parts of triethylamine and 132.1 parts of water were simultaneously added and mixed to the mixture to carry out neutralization of Step (Step β), and dispersing in water of Step (Step γ), simultaneously. Then, 14.8 parts of a 40wt% aqueous hexamethylenediamine solution was added to the mixture, and chain-elongation reaction was carried out at room temperature for 24 hours (Step δ). The formed product was heated under reduced pressure from the room temperature to 50°C for 3 hours to remove MEK to obtain Aqueous polyurethane resin dispersion 3.

### [Example 4]

### (Preparation of Polycarbonate polyol (a1-4))

In a round-bottom flask made of a glass and equipped with a fractionating column, a stirrer, a thermometer and a nitrogen-introducing tube were charged 84.0 parts of dimethylcarbonate, 136.2 parts of pentaerythritol and 0.1 part of potassium carbonate, and transesterification reaction was carried out for 1 hour under normal pressure and under stirring, while removing a mixture of methanol and dimethylcarbonate by distillation. During the procedure, the reaction temperature was gradually raised from 85°C to 110°C, and a composition of the distillate was controlled so that it became an azeotropic composition of methanol and dimethylcarbonate or a neighbor thereof. Thereafter, the pressure was gradually reduced to 30 mmHg, and transesterification reaction was further carried out at 120°C for 1 hour under stirring while removing a mixture of methanol and dimethylcarbonate by distillation. After completion of the reaction (after completion of distillation of methanol and dimethylcarbonate), the reaction mixture was cooled to room temperature to obtain a polycarbonate polyol prepolymer. The resulting polycarbonate polyol prepolymer had a number average molecular weight of 500. Next, in 1000 ml of a round-bottom flask made of a glass and equipped with a stirrer, a thermometer, a nitrogen-introducing tube and a condenser were charged 25.0 parts of the resulting polycarbonate polyol prepolymer and 200 parts of a polycarbonate diol (available from UBE INDUSTRIES, LTD., Trade name: "ETERNACOLL UH-200", molecular weight 2000, hydroxyl value: 56.1 mg KOH/g), and the mixture was stirred under reduced pressure of 50 mmHg and after reaching to the reaction temperature to 125°C, the reaction was carried out at 125°C for 4 hours. Sampling was carried out in the course of the reaction, and it was confirmed that the transesterification reaction reached to equilibrium by GPC measurement. After completion of the reaction, the reaction mixture was cooled to room temperature and dissolved in ethyl acetate. Water was added to the mixture, the mixture was stirred and the aqueous layer was removed by separating the liquids. This operation was carried out once more to obtain an ethyl acetate solution. To the ethyl acetate solutions was added magnesium sulfate, and the mixture was stirred and then filtered to remove magnesium sulfate. Thereafter, ethyl acetate was removed by distillation to obtain Polycarbonate polyol (a1-4). The resulting Polycarbonate polyol (a1-4) had a number average molecular weight of 1500, and an average hydroxyl group number in one molecule of 4.2.

### (Preparation of aqueous polyurethane resin dispersion)

In a reaction device equipped with a stirrer and a heater were charged 43.5 parts of the above-mentioned Polycarbonate polyol (a1-4), 3.9 parts of dimethylol propionic acid and 25.3 parts of MEK while introducing nitrogen. Thereafter, the mixture was heated to 60°C, and dissolution of dimethylol propionic acid was confirmed. To the mixture were added 28.6 parts of hydrogen-added MDI and 0.02 part of dibutyl tin dilaurate as a catalyst, and the mixture was heated to 80°C to carry out urethanization reaction over 4 hours. To the mixture was further added 109.8 parts of MEK, and the resulting mixture was heated to 90°C for 3 hours to prepare a prepolymer (Step α). An NCO group content at the time of completion of the urethanization reaction was 2.0wt%. After cooling the reaction mixture to 30°C, 2.9 parts of triethylamine was added and mixed to carry out neutralization (Step β). Further, 136.8 parts of water was added to disperse the mixture (Step γ). Then, 14.8 parts of a 40wt% aqueous hexamethylenediamine solution was added to the mixture, and chain-elongation reaction was carried out at room temperature for 24 hours (Step δ). The formed product was heated under reduced pressure from the room temperature to 50°C for 3 hours to remove MEK to obtain Aqueous polyurethane resin dispersion 4.

### [Example 5]

### (Preparation of Polycarbonate polyol (a1-5))

In a round-bottom flask made of a glass and equipped with a fractionating column, a stirrer, a thermometer and a nitrogen-introducing tube were charged 84.0 parts of dimethylcarbonate, 136.2 parts of pentaerythritol and 0.1 part of potassium carbonate, and transesterification reaction was carried out for 1 hour under normal pressure and under stirring, while removing a mixture of methanol and dimethylcarbonate by distillation. During the procedure, the reaction temperature was gradually raised from 85°C to 110°C, and a composition of the distillate was controlled so that it became an azeotropic composition of methanol and dimethylcarbonate or a neighbor thereof. Thereafter, the pressure was gradually reduced to 30 mmHg, and transesterification reaction was further carried out at 120°C for 1 hour under stirring while removing a mixture of methanol and dimethylcarbonate by distillation. After completion of the reaction (after completion of distillation of methanol and dimethylcarbonate), the reaction mixture was cooled to room temperature to obtain a polycarbonate polyol prepolymer. The resulting polycarbonate polyol prepolymer had a number average molecular weight of 500. Next, in 1000 ml of a round-bottom flask made of a glass and equipped with a stirrer, a thermometer, a nitrogen-introducing tube and a condenser were charged 40.0 parts of the resulting polycarbonate polyol prepolymer and 300 parts of a polycarbonate diol (available from UBE INDUSTRIES, LTD., Trade name: "ETERNACOLL UH-300", which uses 1,6-hexanediol and a carbonate as starting materials, a number average molecular weight 3000, hydroxyl value: 37.4 mg KOH/g), and the mixture was stirred under reduced pressure of 50 mmHg and after reaching to the reaction temperature to 125°C, the reaction was carried out at 125°C for 4 hours. Sampling was carried out in the course of the reaction, and it was confirmed that the transesterification reaction reached to equilibrium by GPC measurement. After completion of the reaction, the reaction mixture was cooled to room temperature and dissolved in ethyl acetate. Water was added to the mixture, the mixture was stirred and the aqueous layer was removed by separating the liquids. This operation was carried out once more to obtain an ethyl acetate solution. To the ethyl acetate solutions was added magnesium sulfate, and the mixture was stirred and then filtered to remove magnesium sulfate. Thereafter, ethyl acetate was removed by distillation to obtain Polycarbonate polyol (a1-5). The resulting Polycarbonate polyol (a1-5) had a number average molecular weight of 1900, and an average hydroxyl group number in one molecule of 4.9.

### (Preparation of aqueous polyurethane resin dispersion)

In a reaction device equipped with a stirrer and a heater were charged 55.1 parts of the above-mentioned Polycarbonate polyol (a1-5), 3.9 parts of dimethylol propionic acid and 29.2 parts of MEK while introducing nitrogen. Thereafter, the mixture was heated to 60°C, and dissolution of dimethylol propionic acid was confirmed. To the mixture were added 28.6 parts of hydrogen-added MDI and 0.02 part of dibutyl tin dilaurate as a catalyst, and the mixture was heated to 80°C to carry out urethanization reaction over 4 hours. To the mixture was further added 126.5 parts of MEK, and the resulting mixture was heated to 90°C for 3 hours to prepare a prepolymer (Step α). An NCO group content at the time of completion of the urethanization reaction was 1.8wt%. After cooling the reaction mixture to 30°C, 2.9 parts of triethylamine was added and mixed to carry out neutralization (Step β). Further, 204.4 parts of water and 14.8 parts of a 40wt% aqueous hexamethylenediamine solution were simultaneously added to the mixture, and chain-elongation reaction was carried out at room temperature for 24 hours (Step γ, Step δ). The formed product was heated under reduced pressure from the room temperature to 50°C for 3 hours to remove MEK to obtain Aqueous polyurethane resin dispersion 5.

### [Example 6]

### (Preparation of (a2) polycarbonate polyol)

In the same manner as in Example 1, Polycarbonate polyol (a1-1) having a number average molecular weight of 1650 and an average hydroxyl group number of 2.8 was synthesized. In a reaction device equipped with a stirrer and a heater were charged 165 parts of Polycarbonate polyol (a1-1) and 13.4 parts of dimethylol propionic acid, and the mixture was heated to 160°C. To the mixture was charged 0.05 part of tetrabutyl titanate, and the mixture was reacted at 180°C for 6 hours to obtain a carboxylic acid-containing polycarbonate polyol. The resulting Polycarbonate polyol (a2) had a number average molecular weight of 890, and an average hydroxyl group number in one molecule of 2.4.

### (Preparation of aqueous polyurethane resin dispersion)

In a reaction device equipped with a stirrer and a heater were charged 44.5 parts of the above-mentioned Polycarbonate polyol (a2) and 26.1 parts of MEK while introducing nitrogen. To the mixture were added 23.0 parts of hydrogen-added MDI and 0.02 part of dibutyl tin dilaurate as a catalyst, and the mixture was heated to 80°C to carry out urethanization reaction over 4 hours. To the mixture was further added 117.0 parts of MEK, and the resulting mixture was heated to 90°C for 3 hours to prepare a prepolymer (Step α). An NCO group content at the time of completion of the urethanization reaction was 1.5wt%. After cooling the reaction mixture to 30°C, 2.5 parts of triethylamine was added and mixed to carry out neutralization (Step β). Further, 157.6 parts of water was added to disperse the mixture (Step γ). Then, 10.4 parts of a 40wt% aqueous hexamethylenediamine solution was added to the mixture, and chain-elongation reaction was carried out (Step δ). The product was heated under reduced pressure at 50°C for 3 hours to remove MEK to obtain Aqueous polyurethane resin dispersion 6.

### [Comparative example 1]

In a reaction device equipped with a stirrer and a heater were charged 59.1 parts of "ETERNACOLL UH-200" (available from UBE INDUSTRIES, LTD., a polycarbonate diol using 1,6-hexanediol and dimethylcarbonate as starting materials and having a number average molecular weight of 2000, an average hydroxyl group number: 2) having a hydroxyl value of 56.1, 1.0 part of trimethylolpropane, 5.0 parts of dimethylol propionic acid and 41.0 parts of MEK while introducing nitrogen. Thereafter, the mixture was heated to 60°C, and dissolution of dimethylol propionic acid was confirmed. To the mixture were added 30.5 parts of hydrogen-added MDI and 0.04 part of dibutyl tin dilaurate as a catalyst, and the mixture was heated to 80°C to carry out urethanization reaction over 4 hours to prepare a prepolymer. An NCO group content at the time of completion of the urethanization reaction was 4.7wt%. After cooling the reaction mixture to 30°C, 53.9 parts of MEK was additionally added to the mixture, and 3.5 parts of triethylamine was added and mixed to carry out neutralization. Further, 203.2 parts of water was added to disperse the mixture. Then, 9.7 parts of a 40wt% aqueous hexamethylenediamine solution was added to the mixture, and chain-elongation reaction was carried out. The product was heated under reduced pressure at 50°C for 3 hours to remove MEK to obtain a polyurethane resin dispersion.

### [Comparative example 2]

In a reaction device equipped with a stirrer and a heater were charged 51.6 parts of "ETERNACOLL UH-200" (available from UBE INDUSTRIES, LTD., a polycarbonate diol using 1,6-hexanediol and dimethylcarbonate as starting materials and having a number average molecular weight of 2000, an average hydroxyl group number: 2) having a hydroxyl value of 56.1, 1.6 parts of trimethylolpropane, 5.1 parts of dimethylol propionic acid and 38.7 parts of MEK while introducing nitrogen. Thereafter, the mixture was heated to 60°C, and dissolution of dimethylol propionic acid was confirmed. To the mixture were added 31.8 parts of hydrogen-added MDI and 0.04 part of dibutyl tin dilaurate as a catalyst, and the mixture was heated to 80°C to carry out urethanization reaction over 4 hours to prepare a prepolymer. An NCO group content at the time of completion of the urethanization reaction was 5.0wt%. After cooling the reaction mixture to 30°C, 49.0 parts of MEK was additionally added to the mixture, and 3.7 parts of triethylamine was added and mixed to carry out neutralization. Further, 194.8 parts of water was added to disperse the mixture. Then, 9.6 parts of a 40wt% aqueous hexamethylenediamine solution was added to the mixture, and chain-elongation reaction was carried out. The product was heated under reduced pressure at 50°C for 3 hours to remove MEK to obtain a polyurethane resin dispersion.

Number average molecular weights of polycarbonate polyols prepared in Examples 1 to 6 and Comparative examples 1 to 2 are shown in Table 1.

### [Test example 1]

### (Evaluation of film preparing property)

The above-mentioned respective polyurethane resin dispersions were each coated on a glass plate with a thickness of about 0.4 mm uniformly. Then, each was dried at 120°C for 3 hours, and film-forming property was evaluated with naked eyes. The standard of the evaluation are ○ : no crack was found in the resulting film, Δ: a little crack was found in the resulting film, and × : cracks were found on the whole resulting film.

### (Preparation ofpolyurethane film)

The above-mentioned respective Polyurethane resin dispersions were coated on a glass plate with a thickness of about 0.4 mm uniformly. Then, each was dried at 120°C for 3 hours, and peeled off from the glass plate, and applied to the following evaluations.

### (Physical property of film)

According to the method in accordance with JIS K 7113, modulus of elasticityof the above-mentioned polyurethane films was measured.
The film-forming property and modulus of elasticity of the film are shown in Table 1.

**Table 1**

| | Example 1 | Example 2 | Example 3 | Example 4 | Example 5 | Example 6 | Comparative example 1 | Comparative example 2 |
|---|---|---|---|---|---|---|---|---|
| Number average molecular weight of polycarbon ate polyol | 1650 | 700 | 830 | 1500 | 1900 | 890 | 2000 | 2000 |
| Film-forming property | ○ | ○ | ○ | ○ | ○ | ○ | Δ | × |
| Modulus of elasticity [MPa] | 440 | 270 | 290 | 490 | 550 | 410 | 140 | 210 |

### [Example 7]

### (Preparation of polycarbonate polyol (a1-7))

A trimethylolpropane-containing polycarbonate polyol (a number average molecular weight 900, average hydroxyl group number 2.7) as Polycarbonate polyol (a1-7) was prepared as follows.

In 500 ml of a round-bottom flask made of a glass and equipped with a fractionating column, a stirrer, a thermometer and a nitrogen-introducing tube were charged 91.2 parts of dimethylcarbonate, 134.2 parts of trimethylolpropane (available from MITSUBISHI GAS CHEMICAL COMPANY INC.) and 0.1 part of potassium carbonate, and transesterification reaction was carried out for 3 hours under normal pressure and under stirring, while removing a mixture of methanol and dimethylcarbonate by distillation. During the procedure, the reaction temperature was gradually raised from 85°C to 110°C, and a composition of the distillate was controlled so that it became an azeotropic composition of methanol and dimethylcarbonate or a neighbor thereof. Thereafter, the pressure was gradually reduced to 30 mmHg, and transesterification reaction was further carried out at 120°C for 2 hours under stirring while removing a mixture of methanol and dimethylcarbonate by distillation. After completion of the reaction (after completion of distillation of methanol and dimethylcarbonate), the reaction mixture was cooled to room temperature to obtain a polycarbonate polyol prepolymer. Incidentally, the transesterification reaction was carried out in a nitrogen stream. The resulting polycarbonate polyol prepolymer had a number average molecular weight of 500. Next, in 1000 ml of a round-bottom flask made of a glass and equipped with a stirrer, a thermometer, a nitrogen-introducing tube and a condenser were charged 50.0 parts of the resulting polycarbonate polyol prepolymer and 400 parts of a polycarbonate diol (available from UBE INDUSTRIES, LTD., Trade name: ETERNACOLL UH-100, which uses 1,6-hexanediol and a carbonate as starting materials having a molecular weight of 1000, a hydroxyl value: 112.2 mg KOH/g), and the mixture was stirred under reduced pressure of 50 mmHg and after reaching to the reaction temperature to 125°C, the reaction was carried out at 125°C for 4 hours. Sampling was carried out in the course of the reaction, and it was confirmed that the transesterification reaction reached to equilibrium by GPC measurement. After completion of the reaction, the reaction mixture was cooled to room temperature, and dissolved in 3000 parts of ethyl acetate. 70 parts of water was added to the mixture, the mixture was stirred for 30 minutes and the aqueous layer was removed by separating the liquids. This operation was carried out once more to obtain an ethyl acetate solution. To the ethyl acetate solution was added 30 g of magnesium sulfate, and the mixture was stirred for 30 minutes. Then, the mixture was filtered to remove magnesium sulfate, and ethyl acetate was then removed by distillation to obtain a trimethylolpropane-containing Polycarbonate polyol (a1-7). The resulting Polycarbonate polyol (a1-7) had a number average molecular weight of 900, and an average hydroxyl group number of 2.7.

### (Preparation of aqueous polyurethane resin dispersion)

In a reaction device equipped with a stirrer and a heater were charged 15.0 parts by weight of "ETERNACOLL UH-200" (available from UBE INDUSTRIES, LTD., a polycarbonate diol using 1,6-hexanediol and dimethylcarbonate as starting materials and having a number average molecular weight of 2000, an average hydroxyl group number: 2) having a hydroxyl value of 56.1, 3.8 parts by weight of the above-mentioned Polycarbonate polyol (a1-7), 1.5 parts by weight of dimethylol propionic acid (available from NIPPON KASEI CHEMICAL CO., LTD.) and 13.0 parts by weight of methyl ethyl ketone (hereinafter sometimes abbreviated to as "MEK"), while introducing nitrogen. Thereafter, the mixture was heated to 60°C, and dissolution of dimethylol propionic acid was confirmed. To the mixture were added 9.7 parts by weight of 4,4'-dicyelohcxylmethane diisocyanate (hereinafter sometimes abbreviated to as "hydrogen-added MDI") and 0.01 part by weight of dibutyl tin dilaurate as a catalyst, and the mixture was heated to 80°C to carry out urethanization reaction over 4 hours to prepare a prepolymer (Step α). An NCO group content at the time of completion of the urethanization reaction was 5.0wt%. After cooling the reaction mixture to 30°C, 15.8 parts of MEK was added to the mixture, and 1.0 part of triethylamine was added and mixed to carry out neutralization (Step β). Further, 61.5 parts of water was added to disperse the mixture (Step γ). Then, 2.8 parts of a 40wit% aqueous hexamethylenediamine solution was added to the mixture, and chain-elongation reaction was carried out at 20°C for 60 hours (Step δ). The product was heated under reduced pressure from 20°C to 50°C for 3 hours to remove MEK to obtain a polyurethane resin dispersion.

### [Example 8]

In a reaction device equipped with a stirrer and a heater were charged 19.8 parts by weight of "ETERNACOLL UH-200" (available from UBE INDUSTRIES, LTD., a polycarbonate diol using 1,6-hexanediol and dimethylcarbonate as starting materials and having a number average molecular weight of 2000, an average hydroxyl group number: 2) having a hydroxyl value of 56.1, 10.1 parts by weight of Polycarbonate polyol (a1-7) used in Example 1, 2.7 parts by weight of dimethylol propionic acid and 21.4 parts by weight of MEK while introducing nitrogen. Thereafter, the mixture was heated to 60°C, and dissolution of dimethylol propionic acid was conformed. To the mixture were added 17.5 parts by weight of hydrogen-added MDI and 0.02 part by weight of dibutyl tin dilaurate as a catalyst, and the mixture was heated to 80°C to carry out urethanization reaction over 4 hours to prepare a prepolymer (Step α). An NCO group content at the time of completion of the urethanization reaction was 5.4wt%. After cooling the reaction mixture to 30°C, 25.5 parts by weight of MEK was added to the mixture, and 1.9 parts by weight of triethylamine was added and mixed to carry out neutralization (Step β). Further, 100.5 parts of water was added to disperse the mixture (Step γ). Then, 5.6 parts of a 40wt% aqueous hexamethylenediamine solution was added to the mixture, and chain-elongation reaction was carried out at 20°C for 48 hours (Step δ). The product was heated under reduced pressure from 20°C to 50°C for 3 hours to remove MEK to obtain a polyurethane resin dispersion.

### [Example 9]

### (Preparation of polycarbonate polyol (a1-9))

A trimethylolpropane-containing polycarbonate polyol (a number average molecular weight: 1650, average hydroxyl group number: 2.8) as Polycarbonate polyol (a1-9) was prepared as follows.

In 500 ml of a round-bottom flask made of a glass and equipped with a fractionating column, a stirrer, a thermometer and a nitrogen-introducing tube were charged 91.2 parts of dimethylcarbonate, 134.2 parts of trimethylolpropane and 0.1 part of potassium carbonate, and transesterification reaction was carried out for 3 hours under normal pressure and under stirring, while removing a mixture of methanol and dimethylcarbonate by distillation. During the procedure, the reaction temperature was gradually raised from 85°C to 110°C, and a composition of the distillate was controlled so that it became an azeotropic composition of methanol and dimethylcarbonate or a neighbor thereof. Thereafter, the pressure was gradually reduced to 30 mmHg, and transesterification reaction was further carried out at 120°C for 2 hours under stirring while removing a mixture of methanol and dimethylcarbonate by distillation. After completion of the reaction (after completion of distillation of methanol and dimethylcarbonate), the reaction mixture was cooled to room temperature to obtain a polycarbonate polyol prepolymer. Incidentally, the transesterification reaction was carried out in a nitrogen stream. The resulting polycarbonate polyol prepolymer had a number average molecular weight of 500. Next, in 1000 ml of a round-bottom flask made of a glass and equipped with a stirrer, a thermometer, a nitrogen-introducing tube and a condenser were charged 15.0 parts of the resulting polycarbonate polyol prepolymer and 200 parts of a polycarbonate diol (available from UBE INDUSTRIES, LTD., Trade name: ETERNACOLL UH-200, molecular weight 2000, hydroxyl value: 56.1 mg KOH/g), and the mixture was stirred under reduced pressure of 50 mmHg and after reaching to the reaction temperature to 125°C, the reaction was carried out at 125°C for 4 hours. Sampling was carried out in the course of the reaction, and it was confirmed that the transesterification reaction reached to equilibrium by GPC measurement. After completion of the reaction, the reaction mixture was cooled to room temperature, and dissolved in 540 parts of ethyl acetate. 100 parts of water was added to the mixture and after stirring the mixture for 30 minutes, the aqueous layer was removed by separating the liquids. This operation was carried out once more to obtain an ethyl acetate solution. To the ethyl acetate solution was added 50 g of magnesium sulfate and the mixture was stirred for 30 minutes. Then, the mixture was filtered to remove magnesium sulfate, and ethyl acetate was then removed by distillation to obtain a trimethylolpropane-containing Polycarbonate polyol (a1-9). The resulting Polycarbonate polyol (a1-9) had a number average molecular weight of 1650, and an average hydroxyl group number of 2.8.

### (Preparation of aqueous polyurethane resin dispersion)

In a reaction device equipped with a stirrer and a heater were charged 35.7 parts by weight of "ETERNACOLL UH-200" (available from UBE INDUSTRIES, LTD., a polycarbonate diol using 1,6-hexanediol and dimethylcarbonate as starting materials and having a number average molecular weight of 2000, an average hydroxyl group number: 2) having a hydroxyl value of 56.1, 21.5 parts by weight of Polycarbonate polyol (a1-9), 4.8 parts by weight of dimethylol propionic acid and 40.2 parts by weight of MEK while introducing nitrogen. Thereafter, the mixture was heated to 60°C, and dissolution of dimethylol propionic acid was confirmed. To the mixture were added 31.5parts by weight of hydrogen-added MDI and 0.04 part by weight of dibutyl tin dilaurate as a catalyst, and the mixture was heated to 80°C to carry out urethanization reaction over 4 hours to prepare a prepolymer (Step α). An NCO group content at the time of completion of the urethanization reaction was 6.7wt%. After cooling the reaction mixture to 30°C, 56.4 parts by weight of MEK. was added to the mixture, and 3.4 parts by weight of triethylamine was added and mixed to carry out neutralization (Step β). Further, 198.9 parts of water was added to disperse the mixture (Step γ). Then, 9.3 parts by weight of a 40wt% aqueous hexamethylenediamine solution was added to the mixture, and chain-elongation reaction was carried out at 20°C for 48 hours (Step δ). The product was heated under reduced pressure at 50°C for 3 hours to remove MEK to obtain a polyurethane resin dispersion.

### [Example 10]

In a reaction device equipped with a stirrer and a heater were charged 67.0 parts of "ETERNACOLL UH-200" (available from UBE INDUSTRIES, LTD., a polycarbonate diol using 1,6-hexanediol and dimethylcarbonate as starting materials and having a number average molecular weight of 2000, an average hydroxyl group number: 2) having a hydroxyl value of 56.1, 4.0 parts of Polycarbonate polyol (a1-7) used in Example 1, 5.0 parts of dimethylol propionic acid and 37.0 parts of MEK while introducing nitrogen. Thereafter, the mixture was heated to 60°C, and dissolution of dimethylol propionic acid was confirmed. To the mixture were added 30.0 parts of hydrogen-added MDI and 0.04 part of dibutyl tin dilaurate as a catalyst, and the mixture was heated to 80°C to carry out urethanization reaction over 4 hours to prepare a prepolymer (Step α). An NCO group content at the time of completion of the urethanization reaction was 4.6wt%. After cooling the reaction mixture to 30°C, 63.4 parts of MEK was added to the mixture, and 3.5 parts of triethylamine was added and mixed to carry out neutralization (Step β). Further, 221.6 parts of water was added to disperse the mixture (Step γ). Then, 7.7 parts of a 40wt% aqueous hexamethylenediamine solution was added to the mixture, and chain-elongation reaction was carried out at 20°C for 48 hours (Step δ). The product was heated under reduced pressure from 20°C to 50°C for 3 hours to remove MEK to obtain a polyurethane resin dispersion.

### [Test example 2]

Evaluation of the film-forming property was carried out in the same manner as in Test example 1. The results are shown in Table 2.

**Table 2**

| | Example 7 | Example 8 | Example 9 | Example 10 | Comparative example 3 | Comparative example 4 |
|---|---|---|---|---|---|---|
| Evaluation of film-forming property | ○ | ○ | ○ | ○ | Δ | × |

A polyurethane film was prepared in the same manner as in Test example 1, modulus of elasticity and tensile elongation at break of the above-mentioned polyurethane film was measured according to the method in accordance with JIS K 7113. The results are shown in Table 3.

**Table 3**

| | Example 7 | Example 8 | Example 9 | Example 10 | Comparative example 3 | Comparative example 4 |
|---|---|---|---|---|---|---|
| Modulus of elasticity (MPa) | 90 | 110 | 110 | 37 | 140 | 210 |
| Tensile elongation at break (%) | 680 | 800 | 720 | 1000 | 620 | 470 |

### [Example 11]

### (Preparation of coating composition)

280 g of a water-dispersible polyester polyol ("SETAL 6306" manufactured by NUPLEX CO., a resin concentration: 60% by weight, a hydroxyl value: 89 mg KOH/g of resin, an acid value: 42 mg KOH/g of resin) neutralized by dimethylethanolamine with a molar ratio of carboxylic acid/amine being 1.0, 600 g of rutile type titanium dioxide, 15 g of barium sulfate and 280 g of deionized water were dispersed by a paint shaker for 30 minutes to prepare a pigment-dispersed paste.

To the resulting pigment-dispersed paste were added 430 g of the aqueous polyurethane resin dispersion obtained in Example 1, 115 g of a water-dispersible polyester polyol ("SETAL 6306" manufactured by NUPLEX CO.) neutralized by dimethylethanolamine with a molar ratio of carboxylic acid/amine being 1.0, deionized water 115 g, 330 g of an acryl polyol ("SETALUX 1767VV-65" manufactured by ACZO NOBEL, a number average molecular weight=2500, a hydroxyl value=150 mg KOH/g (based on the resin component), Tg=9.0°C), and 330 g of a methyl-butyl mixed etherified melamine resin ("U-VAN 2028" manufactured by MITSUI CHEMICALS, INC.), and the mixture was uniformly dispersed to obtain a coating composition.

The resulting coating composition was coated onto an electrodeposited steel plate with a thickness of 25 µm, and heated at 140°C for 30 minutes to obtain a good coating film.

### UTILIZABILITY IN INDUSTRY

The aqueous polyurethane resin dispersion of the present invention can be widely utilized as a starting material for paint or a coating agent, etc.

## Claims

1. An aqueous Polyurethane resin dispersion which comprises an aqueous polyurethane resin obtained by reacting
(A) a polyurethane prepolymer obtained by reacting (a1) a polycarbonate polyol having no urethane bonding, (b) a polyol compound having an acidic group, and (c) a polyisocyanate, and
(B) a chain elongating agent having a reactivity with the isocyanate group of the (A) polyurethane prepolymer,
being dispersed in an aqueous medium, and
(a1) the polycarbonate polyol has a number average molecular weight of 400 to 5000, and has 2.05 to 5 hydroxyl groups in average in one molecule.

2. The aqueous polyurethane resin dispersion according to Claim 1, wherein (A) the polyurethane prepolymer is a material obtained by reacting (a1) a polcarbonate polyol having no urethane bonding, (a') a polycarbonate diol, (b) a polyol compound having an acidic group, and (c) a polyisocyanate, where (a1) the polycarbonate polyol has a number average molecular weight of 400 to 5000, and has 2.05 to 5 hydroxyl groups in average in one molecule.

3. The aqueous polyurethane resin dispersion according to Claim 1 or 2, wherein (a1) the polycarbonate polyol is a material obtained by reacting a diol compound, one or more polyol compounds selected from a triol compound, a tetraol compound and a pentaol compound, and a carbonate compound.

4. The aqueous polyurethane resin dispersion according to Claim 1 or 2, wherein (a1) the polycarbonate polyol is a material obtained by subjecting a polycarbonate diol, and one or more polyol compounds selected from a triol compound, a tetraol compound and a pentaol compound to transesterification reaction.

5. An aqueous polyurethane resin dispersion which comprises an aqueous polyurethane resin obtained by reacting
(A) a polyurethane prepolymer obtained by reacting (a2) the polycarbonate polyol having no urethane bonding and (c) a polyisocyanate, and
(B) a chain elongating agent having a reactivity with the isocyanate group of (A) the polyurethane prepolymer,
being dispersed in an aqueous medium, and
(a2) the polycarbonate polyol has a number average molecular weight of 600 to 5000, has 2.05 to 5 hydroxyl groups in average in one molecule, and has an acidic group.

6. The aqueous polyurethane resin dispersion according to Claim 5, wherein (A) the polyurethane prepolymer is obtained by reacting (a2) the polycarbonate polyol having no urethane bonding, (a') a polycarbonate diol and (c) a polyisocyanate, and (a2) the polycarbonate polyol has a number average molecular weight of 600 to 5000, has 2.05 to 5 hydroxyl groups in average in one molecule, and has an acidic group.

7. The aqueous polyurethane resin dispersion according to Claim 5 or 6, wherein (a2) the polycarbonate polyol is a material obtained by subjecting a polycarbonate diol containing an acidic group obtained by reacting a polycarbonate diol and (b) a polyol compound having an acidic group, and one or more polyol compounds selected from a triol compound, a tetraol compound and a pentaol compound to transesterification reaction.

8. A process for preparing an aqueous polyurethane resin dispersion which comprises the steps of:
Step (α1) of reacting (a1) a polcarbonate polyol having no urethane bonding, (b) a polyol compound having an acidic group and (c) a polyisocyanate to obtain (A) a polyurethane prepolymer,
Step (β) of neutralizing the acidic group of (A) the polyurethane prepolymer,
Step (γ) of dispersing (A) the polyurethane prepolymer in an aqueous medium, and
Step (δ) of reacting (A) the polyurethane prepolymer and (B) a chain elongating agent having a reactivity with the isocyanate group of (A) the polyurethane prepolymer to obtain an aqueous polyurethane resin,
wherein (a1) the polycarbonate polyol has a number average molecular weight of 400 to 5000, and has 2.05 to 5 hydroxyl groups in average in one molecule.

9. The process for preparing an aqueous polyurethane resin dispersion as according to Claim 8, wherein Step (α1) to obtain (A) the polyurethane prepolymer is a step of obtaining (A) a polyurethane prepolymer by reacting (a1) a polcarbonate polyol having no urethane bonding, (a') a polycarbonate diol, (b) a polyol compound having an acidic group, and (c) a polyisocyanate, where (a1) the polycarbonate polyol has a number average molecular weight of 400 to 5000, and has 2.05 to 5 hydroxyl groups in average in one molecule.

10. A process for preparing an aqueous polyurethane resin dispersion which comprises the steps of:
Step (α2) of reacting (a2) a polycarbonate polyol having no urethane bonding and (c) a polyisocyanate to obtain (A) a polyurethane prepolymer,
Step (β) of neutralizing an acidic group of (A) the polyurethane prepolymer,
Step (γ) of dispersing (A) the polyurethane prepolymer in an aqueous medium, and
Step (δ) of reacting (A) the polyurethane prepolymer and (B) a chain elongating agent having a reactivity with the isocyanate group of (A) the polyurethane prepolymer to obtain an aqueous polyurethane resin,
wherein (a2) the polycarbonate polyol has a number average molecular weight of 600 to 5000, has 2.05 to 5 hydroxyl groups in average in one molecule, and has an acidic group.

11. The process for preparing an aqueous polyurethane resin dispersion as according to Claim 10, wherein Step (α2) to obtain (A) the polyurethane prepolymer is a step of reacting (a2) the polycarbonate polyol having no urethane bonding, (a') the polycarbonate diol, and (c) the polyisocyanate to obtain (A) a polyurethane prepolymer, where (a2) the polycarbonate polyol has a number average molecular weight of 600 to 5000, has 2.05 to 5 hydroxyl groups in average in one molecule, and has an acidic group.

12. The process for preparing the aqueous polyurethane resin dispersion according to any one of Claims 8 to 11, wherein Step (β) and Step (γ) are carried out simultaneously.

13. The process for preparing the aqueous polyurethane resin dispersion according to any one of Claims 8 to 11, wherein Step (γ) and Step (δ) are carried out simultaneously.

14. A coating composition containing the aqueous polyurethane resin dispersion according to any one of Claims 1 to 7.
